# EUROPEAN PATENT APPLICATION

(11) **EP 1 939 849 A2**
(43) Date of publication of application: **02.07.2008**
(21) Application number: 07115600.4
(22) Date of filing: 04.09.2007
(51) Int. Cl.: G09G 3/34, G09G 3/28

(54) **Image display device for displaying small-sized image and method thereof**

(30) Priority: 21.12.2006 KR 20060131887
(71) Applicant: Samsung Electronics Co., Ltd., Suwon-si, Gyeonggi-Do (KR)
(72) Inventor: Lee, Joong-keon, Gyeonggi-do (KR)
(74) Representative: D'Halleweyn, Nele Veerle Trees Gertrudis

(57) **Abstract**

An image display device capable of displaying a small-sized image and a method thereof are provided. The image display device includes a display unit, a display driving unit which controls an operation state of the display unit, a user interface unit which receives an input of a user's selection command, an image signal processing unit which receives an image signal and converting the received image signal into a designated size in accordance with the user's selection command, and a control unit which controls the display driving unit to display the converted image signal by activating a designated region on the display unit and inactivating the remaining region in accordance with the user's selection command. The image display device can be implemented by an LCD device or a PDP device. Accordingly, a small-sized image can be displayed in accordance with a user's selection, and power consumption can be reduced.

## Description

### BACKGROUND OF THE INVENTION

### 1. Field of the Invention

Apparatuses and methods consistent with the present invention relate to an image display device capable of displaying a small-sized image and a method thereof. More particularly, the present invention relates to an image display device and a method thereof, which can display an image of a designated size by activating only a designated region and inactivating the remaining region in accordance with a user's determination and thus prevent unnecessary power consumption.

### 2. Description of the Related Art

With the development of electronic technologies, electronic devices having diverse functions have gradually been developed. In particular, home electronic devices have gradually become larger and higher-grade. An image display device such as a television receiver (TV) provides one example.

Conventionally, image display devices using CRTs have been generally used. In the case of a large-screen image display device using a CRT, however, the size of the image display device becomes so large that it is incongruent to place the image display device at home. In order to solve this, diverse types of image display devices such as an LCD TV, a PDP TV, and so forth, have been developed and have spread. These image display devices generally have large screens.

These large-screen image display devices can be usefully used at times when many persons view the devices (e.g., weekday evenings, days off, and so forth), but may cause unnecessary power consumption at times when only a few persons view the devices (e.g., nighttime, early in the morning, weekdays during daytime, and so forth).

For example, 42-inch PDP TV consumes about 320~400 Watts of power under the standard condition, and consumes about 600 Watts of power under instantaneous peak condition. Although the whole screen is not necessary when a few persons view the image, the image display device still uses the whole screen to display the image, consuming the same amount of power as is used by many viewers. Accordingly, power consumption is increased.

Recently, broadcasting stations broadcast diverse types of information including sound (e.g., music)-centered broadcasts. In viewing the sound-centered broadcast, it is not always necessary to display the corresponding image through the whole screen; rather, it may sometimes be preferable to display the image through only a part of the screen in order to reduce power consumption.

In particular, at night or early in the morning, the display of an image signal through the whole screen may disturb other persons' sleep due to the quantity of light emitted from the screen.

### SUMMARY OF THE INVENTION

Embodiments of the present invention have been developed in order to substantially solve the above and other problems associated with the conventional arrangement and provide the aspects listed below. An aspect of exemplary embodiments of the present invention is to provide an image display device and a method thereof, which can prevent unnecessary power consumption and improve user convenience by making it possible to adjust the size and the display position of an image being displayed in accordance with a user's selection.

Another aspect of exemplary embodiments of the present invention is to provide an image display device and a method thereof, which can prevent unnecessary power consumption by making it possible to automatically adjust the size and the display position of an image being displayed in accordance with the characteristic of a broadcast signal.

The foregoing and other aspects are substantially realized by providing an image display device, according to exemplary embodiments of the present invention, which comprises a display unit; a display driving unit for controlling an operation state of the display unit; a user interface unit for receiving an input of a user's selection command; an image signal processing unit for receiving an image signal and converting the received image signal into a designated size in accordance with the user's selection command; and a control unit for controlling the display driving unit to display the converted image signal by activating a designated region on the display unit in accordance with the user's selection command and inactivating the remaining region.

The display unit may comprise an LCD panel; and a backlight unit for providing light to the LCD panel by using a plurality of light-emitting elements. In this case, the display driving unit may inactivate the remaining region by turning on the light-emitting elements corresponding to the designated region and turning off the light-emitting elements corresponding to the remaining region under the control of the control unit.

The display driving unit may inactivate the remaining region in a manner that the display driving unit reduces the quantity of light of the remaining region by reducing an optical power of the light-emitting elements corresponding to the remaining region below a predetermined threshold value under the control of the control unit.

The display unit may comprise a PDP (Plasma Display Panel) composed of a plurality of PDP discharge cells. In this case, the display driving unit may inactivate the remaining region by intercepting an address signal that is supplied to the PDP discharge cells corresponding to the remaining region among the plurality of PDP discharge cells under the control of the control unit.

The display driving unit may inactivate the remaining region in a manner that the display driving unit reduces the quantity of light of the remaining region by reducing a frequency of a sustain signal being supplied to the PDP discharge cells corresponding to the remaining region among the plurality of PDP discharge cells below a predetermined threshold value under the control of the control unit.

The image display device according to exemplary embodiments of the present invention may further comprise a determination unit for determining whether the image signal corresponds to a broadcast signal of a predetermined type. If it is determined that the image signal corresponds to the broadcast signal of the predetermined type, the control unit may control the image signal processing unit to convert the image signal into the predetermined size, and control the display driving unit to display the converted image signal by activating the designated region on the display unit and to inactivate the remaining region except for the designated region.

The user interface unit may display a user interface for selecting a display mode. In this case, the control unit may control the display driving unit to activate the whole region of the display unit if a normal display mode is selected through the user interface, and to activate the designated region if a small-size display mode is selected through the user interface.

The user interface unit may display a user interface for setting a display position and a size of the image signal if the small-size display mode is selected through the user interface. In this case, the control unit may control the display driving unit to display the converted image signal in the display position and with the size set through the user interface.

The user interface unit may display a cursor for setting a start point on a display screen if the small-size display mode is selected through the user interface. If a confirmation command is input through the user interface unit in a state in which the cursor is positioned at designated coordinates, the control unit may control the image signal processing unit to convert the image signal into a size that corresponds to a tetragonal region, e.g., a rectangular region, taken from a point where the cursor is positioned to one corner of the display screen, and control the display driving unit to display the converted image signal by activating the tetragonal region.

According to another aspect of exemplary embodiments of the present invention, a method is provided of displaying an image for an image display device having a display unit, which comprises (a) receiving an image signal; (b) determining whether a selection command for displaying a small-sized image is input; (c) if the selection command is input, converting the image signal into a designated size in accordance with the selection command; and (d) displaying the converted image signal by activating a designated region on the display unit and inactivating the remaining region except for the designated region in accordance with the user's selection command.

The display unit may comprise an LCD panel and a backlight unit for providing light to the LCD panel side by using a plurality of light-emitting elements. In this case, the step (d) may inactivate the remaining region by turning on the light-emitting elements corresponding to the designated region and turning off the light-emitting elements corresponding to the remaining region.

The step (d) may inactivate the remaining region in a manner that the step (d) reduces the quantity of light of the remaining region by reducing an optical power of the light-emitting elements corresponding to the remaining region below a predetermined threshold value.

The display unit may comprise a PDP (Plasma Display Panel) composed of a plurality of PDP discharge cells. In this case, the step (d) may inactivate the remaining region by intercepting an address signal that is supplied to the PDP discharge cells corresponding to the remaining region among the plurality of PDP discharge cells.

The step (d) may inactivate the remaining region in a manner that the step (d) reduces the quantity of light of the remaining region by reducing a frequency of a sustain signal being supplied to the PDP discharge cells corresponding to the remaining region among the plurality of PDP discharge cells below a predetermined threshold value.

The method according to exemplary embodiments of the present invention may further comprise determining whether the image signal corresponds to a broadcast signal of a predetermined type by confirming the type of the image signal; if it is determined that the image signal corresponds to the broadcast signal of the predetermined type, converting the image signal into the predetermined size; and displaying the converted image signal by activating the designated region on the display unit and inactivating the remaining region except for the designated region.

The step (b) may further comprise, if a menu selection command is input, displaying a first user interface for selecting one of a normal display mode and a small-size display mode; and if the small-size display mode is selected through the first user interface, determining that the selection command is input, and displaying a second user interface for selecting a position and a size of the image.

The step (b) may further comprise, if a menu selection command is input, displaying a first user interface for selecting one of a normal display mode and a small-size display mode; and if the small-size display mode is selected through the first user interface, determining that the selection command is input, and displaying a cursor for setting a start point on the display unit.

In this case, the step (c) may convert the image signal into a size that corresponds to a tetragonal region taken from a point where the cursor is positioned to one corner of the display unit if a confirmation command is input in a state in which the cursor is positioned at designated coordinates, and the step (d) may display the converted image signal by activating the tetragonal region.

### BRIEF DESCRIPTION OF THE DRAWINGS

The above and other aspects of the present invention will become apparent and more readily appreciated from the following description of the exemplary embodiments, taken in conjunction with the accompanying drawings, of which:

FIG. 1 is a block diagram illustrating the construction of an image display device according to an exemplary embodiment of the present invention;

FIG. 2 is a schematic view illustrating an example of a display unit of an image display device according to an exemplary embodiment of the present invention;

FIGS. 3 and 4 are schematic views illustrating examples of a backlight unit that can be applied to the display unit of FIG. 2;

FIG. 5 is a schematic view illustrating another example of a display unit used in an image display device according to an exemplary embodiment of the present invention;

FIG. 6 is a view illustrating waveforms of drive signals for driving the display unit of FIG. 5;

FIG. 7 is a schematic view illustrating an example of a small-sized image being displayed on the image display device and an image setting process according to an exemplary embodiment of the present invention;

FIG. 8 is a block diagram illustrating the construction of an image display device according to another exemplary embodiment of the present invention;

FIG. 9 is a flowchart illustrating a method of displaying an image according to an exemplary embodiment of the present invention; and

FIG. 10 is a flowchart illustrating a method of displaying an image according to another exemplary embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will now be described in detail with reference to the annexed drawings. In the drawings, the same elements are denoted by the same reference numerals throughout the drawings. In the following description, detailed descriptions of known functions and configurations incorporated herein have been omitted for conciseness and clarity.

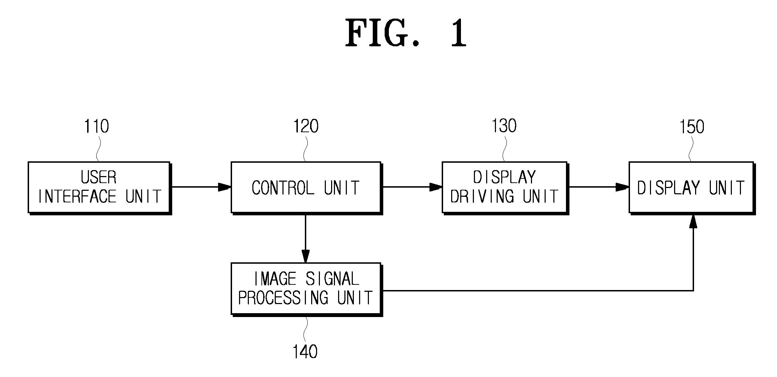

FIG. 1 is a block diagram illustrating the construction of an image display device and an external device according to an exemplary embodiment of the present invention.

Referring to FIG. 1, the image display device according to an exemplary embodiment of the present invention comprises a user interface unit 110, a control unit 120, a display driving unit 130, an image signal processing unit 140, and a display unit 150.

The user interface unit 110 serves to provide various kinds of interfaces. That is, the user interface unit 110 may receive an input signal through an infrared ray (I/R) reception unit for receiving a remote control signal or a keypad unit, or generate and output various kinds of On-Screen Display (OSD) messages through the display unit 140.

The display unit 150 serves to display a broadcast signal and other image signals. The construction of the display unit 150 may differ according to the type of the image display device, which will be described later.

The image signal processing unit 140 serves to convert the received image signal under the control of the control unit 120. Specifically, the image signal processing unit 140 may comprise a tuner for receiving broadcast signals, an input terminal for receiving an external image signal, a demultiplexer , a decoder , a scaler , and a video enhancer. Accordingly, the image signal processing unit can perform demultiplexing, decoding, scaling, video enhancing of the image signal input through the tuner or input terminal. In the scaling process, the image signal processing unit 140 converts the image signal into a designated size under the control of the control unit 120.

The display driving unit 130 adjusts the operation state of the display unit 150 under the control of the control unit 120. Specifically, the display driving unit 130 activates a designated region and inactivates the remaining region on the display unit 150, i.e., the whole display region of the display unit 150. The term "inactivation" means to intercept a power supply used to display the image on the region or to lower the quantity of light by reducing the level of the power. By contrast, the term "activation" means to maintain the power supply used to display the image in a turned-on state, or to maintain the original quantity of light as it is.

The control unit 120 controls the whole operation of the image display device in accordance with a selection command received through the user interface unit 110. Specifically, when the selection command for displaying a small-sized image is input through the user interface unit 110, the control unit 120 controls the image signal processing unit 140 to convert the currently input image signal into a size corresponding to the selection command.

In addition, the control unit 120 controls the display driving unit 130 to activate only the designated region and to inactivate the remaining region in accordance with the selection command. Accordingly, a small-sized image can be provided by displaying the converted image signal through the activated region. In this case, since the remaining region is inactivated as described above, unnecessary power consumption and inconvenience caused by illumination of the remaining region can be prevented.

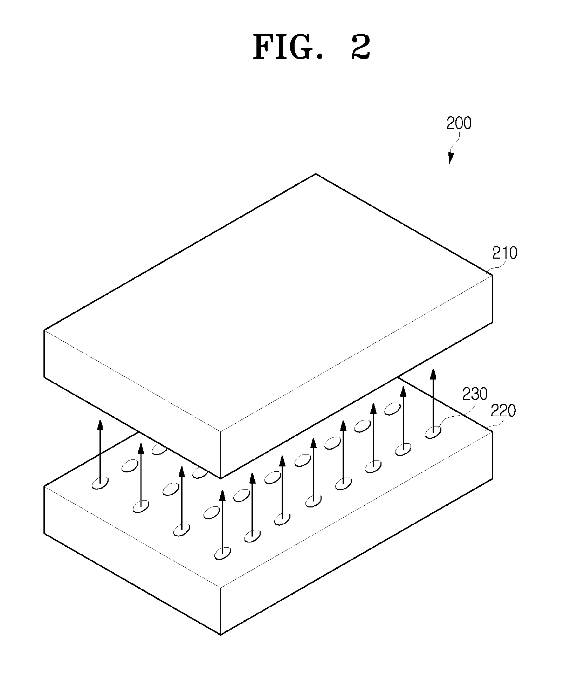

FIG. 2 is a schematic view illustrating an example of a display unit of an image display device according to an exemplary embodiment of the present invention.

The display unit 200 as illustrated in FIG. 2 comprises an LCD panel 210 and a backlight unit 220.

Since the LCD panel 210 is not self-luminous due to the LCD characteristics, it displays an image by receiving light from the backlight unit 220. Since the structures of the LCD panel 210 and the backlight unit 220 are well known, illustration of their detailed structures will be omitted.

The backlight unit 220 has a plurality of light-emitting elements 230 that provide light to the LCD panel 210.

In one exemplary embodiment of the present invention, the display driving unit 130 can activate a designated region of the display unit by turning on the light-emitting elements that correspond to the designated region among the plurality of light-emitting elements 230, and inactivate the remaining region by turning off the light-emitting elements that correspond to the remaining region. In this case, the display driving unit 130 can adjust the activation/inactivation of the regions by turning on/off the power supplied to the respective light-emitting elements.

In another exemplary embodiment of the present invention, the display driving unit 130 can reduce the optical power of the light-emitting elements corresponding to the remaining region by reducing the level of the power being supplied to the light-emitting elements that correspond to the remaining region among the plurality of light-emitting elements 230 below a predetermined threshold value as it maintains the level of the power being supplied to the light-emitting elements that correspond to the designated region. Accordingly, the display driving unit 130 can inactivate the remaining region of the display unit by reducing the quantity of light of the remaining region relatively to the quantity of light of the designated region.

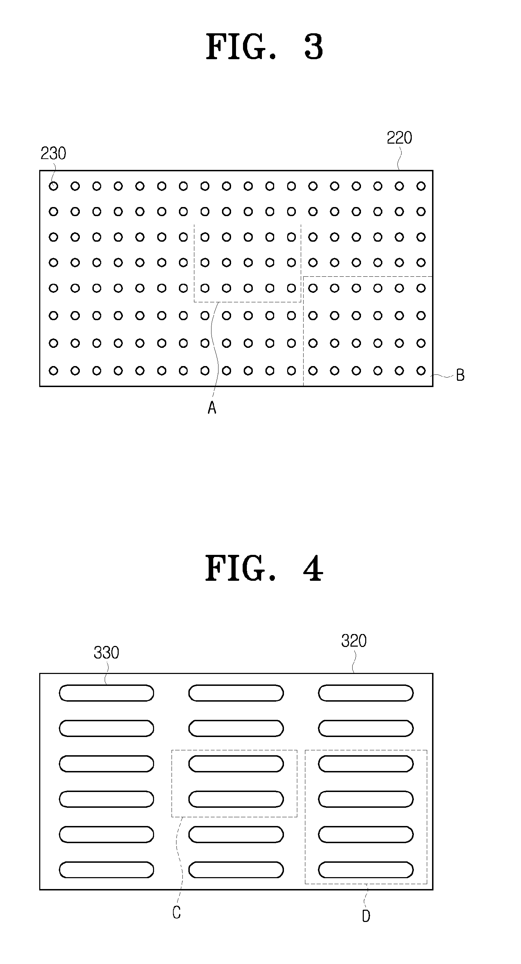

FIG. 3 is a schematic view illustrating an example of a backlight unit 220 having a plurality of LEDs 230. In FIG. 3, if a user designates region A, the display driving unit 130 turns on the LEDs in the region A as it turns off the LEDs in the remaining region, or reduces the optical power of the light-emitting elements corresponding to the remaining region, to inactivate the remaining region. The designated region may be a center region as region A, or may be a corner region of the screen as region B.

FIG. 4 is a schematic view illustrating an example of a backlight unit 320 having a plurality of Cold Cathode Fluorescent Lamps (CCFLs) 330 of FIG. 2. In FIG. 4, if a user designates region C or region D, the display driving unit 130 turns on the CCFLs 330 in the designated region, and turns off or reduces the optical power of the CCFLs in the remaining region to inactivate the remaining region.

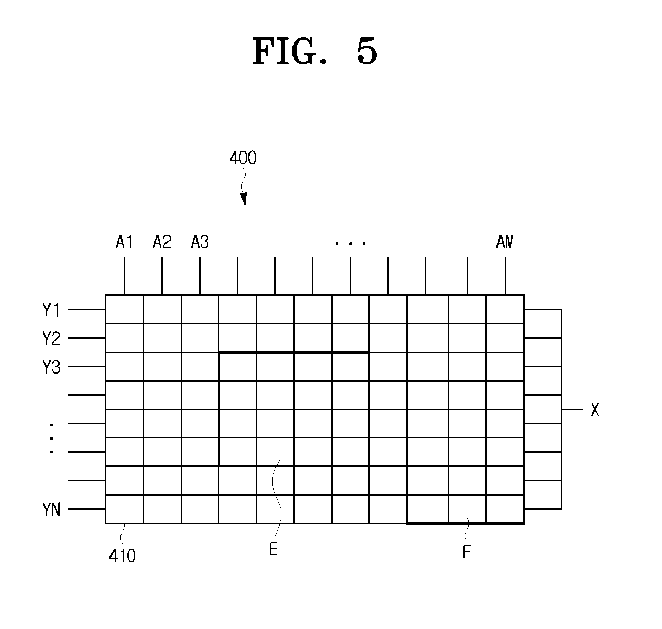

The image display device according to the present invention may be implemented by a PDP display device. In this case, the display unit 150 is implemented in the form as illustrated in FIG. 5.

FIG. 5 is a schematic view illustrating an example of a PDP 400 having a plurality of PDP discharge cells 410.

Referring to FIG. 5, the PDP 400 is provided with a plurality of PDP discharge cells 410 having a lattice pattern. The PDP 400 includes address electrodes Al to AM, sustain electrodes Y1 to YN, and data electrodes X, which are connected to the respective PDP discharge cells 410. Specifically, the PDP 400 has a structure in which the plurality of PDP discharge cells 410 are arranged in the form of a matrix, and each discharge cell 410 is surrounded by a front substrate, a rear substrate, and partitions.

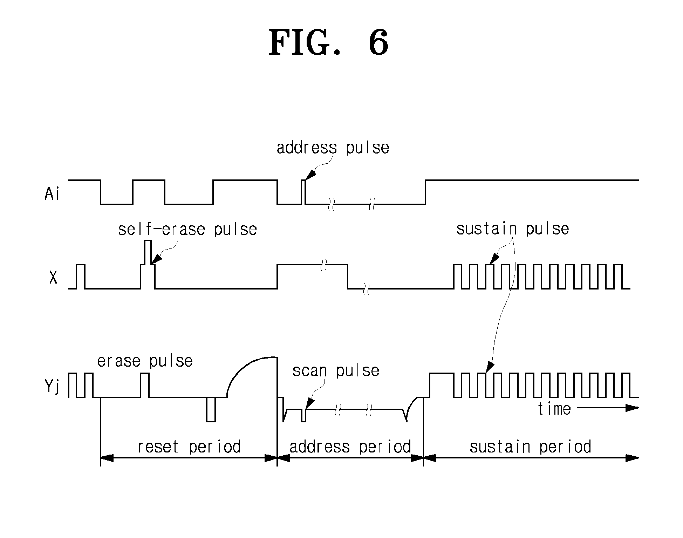

The display driving unit 130 can activate/inactivate the respective PDP discharge cells 410 by applying an address signal or a sustain signal to the PDP discharge cells 410. Waveforms of signals being applied from the display driving unit 130 to the PDP 400 are illustrated in FIG. 6.

Referring to FIG. 6, the signal being applied to the respective electrode provided in the PDP 400 may be divided into a reset period, an address period, and a sustain period. The reset period is a period in which the wall charge state for the previous sustain period is erased and the wall charge is set up so that the addressing operation in the next address period can be stably performed. The address period is a period in which internal capacitors of the cells selected to emit light in the PDP 400 are charged, i.e., the addressing operation is performed. The sustain period is a period in which a sustain voltage is alternately applied to the sustain electrodes and the data electrodes, and thus the addressed cells actually emit light to display the image.

In one exemplary embodiment of the present invention, the display driving unit 130 sets an address pulse signal, which is supplied to the address electrodes connected to the PDP discharge cells 410 corresponding to the remaining region, to zero, so that the PDP discharge cells 410 corresponding to the remaining regions are not addressed. Accordingly, even if the sustain pulse signal is supplied, the PDP discharge cells 410 corresponding to the remaining region do not emit light.

In another exemplary embodiment of the present invention, the display driving unit 130 can drop the sustain signal that is applied to the sustain electrodes and the data electrodes connected to the PDP discharge cells 410 corresponding to the remaining region, i.e., the frequency of the sustain pulse signal, below a predetermined threshold value. Accordingly, the light-emitting period of the PDP discharge cells 410 corresponding to the remaining region is lengthened with the quantity of light reduced, and thus the remaining region can be inactivated. Consequently, the power to be consumed for the sustain operation of the remaining region can be reduced.

As described above, a user can make the image signal be displayed only on the corresponding region by designating a designated region such as region E or region F on the PDP 400 having the structure as illustrated in FIG. 5.

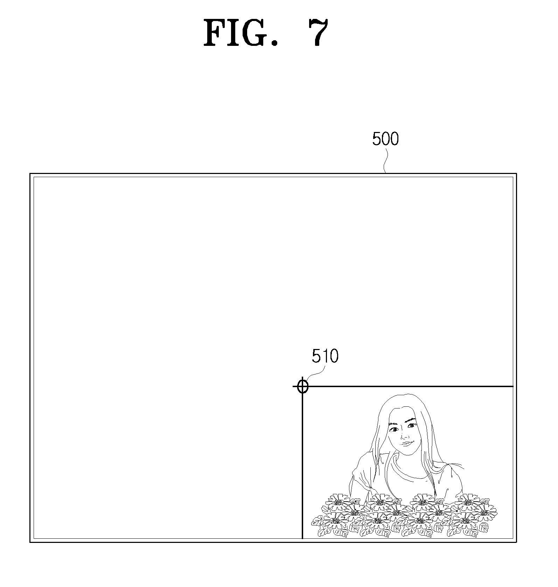

FIG. 7 is a schematic view illustrating an example of a small-sized image being displayed on the image display device and its image selection process according to an exemplary embodiment of the present invention. Referring to FIG. 7, it can be seen that an image is displayed on a right corner part of a display screen 500.

If a user inputs a menu command, the user interface unit 110 provides a user interface (hereinafter referred to as a "first user interface") through which a menu selection is possible. The user can select various kinds of menus through a remote controller, a keypad, or other input means. A menu for selecting a display mode can be included in the menu. That is, the user can select either a normal display mode or a small-size display mode. The normal display mode is a general mode for using the whole screen, and the small-size display mode means a mode in which a small-sized image is displayed automatically or in accordance with a user's selection.

If the small-size display mode is selected, the user interface unit 110 displays a cursor 510 for selecting a start point on a display screen 500. The user can adjust the display position of the cursor 510 by using a direction key.

As shown in FIG. 7, if a separate confirmation command is input in a state in which the cursor 510 is positioned at designated coordinates on the display screen, the control unit 120 recognizes that a tetragonal region taken from the position of the cursor 510 to one corner part of the display screen 500 is designated. In FIG. 7, it is exemplified that the tetragonal region taken from the cursor position to the right lower corner of the display screen 500 is designated. However, it is also possible to designate the tetragonal region taken from the cursor position to any one of the three remaining corners of the display screen.

The image signal processing unit 140 performs a down-scaling of the image signal to a size corresponding to the size of the recognized tetragonal region. Also, the display driving unit 130 activates the region corresponding to the tetragonal region on the display unit 150 and inactivates the remaining region under the control of the control unit 120.

Accordingly, the converted image signal can be output through the activated region.

Unlike the exemplary embodiment illustrated in FIG. 7, when the small-size display mode is selected, the user interface 110 may provide a new user interface for selecting the size and the position of the small-sized image (hereinafter referred to as a "second user interface"). In this case, the adjustable image sizes may be provided by stages on the second user interface. In addition, the horizontal and vertical sizes of the small-sized images by stages may be fixed.

Table 1 below may be provided on the second user interface.

**[Table 1]**

| Horizontal Size | Vertical Size | Inches |
|---|---|---|
| 1366 | 768 | 63 |
| XXXX | YYY | 50 |
| aaaa | bbb | 42 |
| ccc | ddd | 37 |
| eee | fff | 32 |
| ggg | hhh | 29 |
| iii | jj | 25 |
| kk | ll | 21 |
| mm | nn | 14 |
| oo | p | 10 |

Accordingly, if one of the terms "Inches" is selected, the control unit 120 recognizes that the corresponding horizontal and vertical sizes are selected. For example, if the term "25 inches" is selected, the image signal processing unit 140 converts the image signal into an image signal having a horizontal length of "iii" and a vertical length of "jj", and provides the converted image signal to the display unit 150.

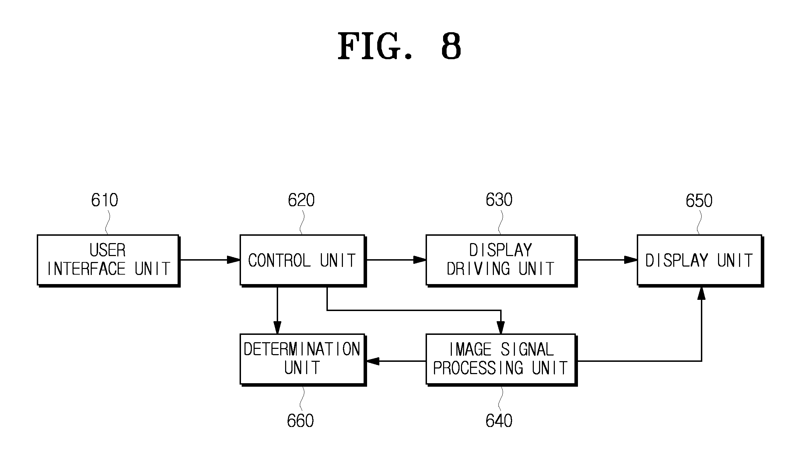

FIG. 8 is a block diagram illustrating the construction of an image display device according to another exemplary embodiment of the present invention.

Referring to FIG. 8, the image display device according to another exemplary embodiment of the present invention comprises an user interface unit 610, a control unit 620, a display driving unit 630, an image signal processing unit 640, a display unit 650, and a determination unit 660.

The determination unit 660 serves to determine whether the received image signal is a predetermined broadcast signal by confirming the type of the received image signal. Specifically, the determination unit 660 determines whether the image signal is a general broadcast signal or a music broadcast signal by detecting identification information of the received image signal. In this case, the program ID for reporting the name of a broadcasting program may be used as the identification information. In the case of the music broadcast signal, the size of an image is unimportant. In this case, it is preferable to display a small-sized image for the reduction of power consumption.

The determination unit 660 determines whether the identification information of the received image signal is included in information that is stored in a separate memory (not illustrated), and provides the result of the determination to the control unit 620.

If the received image signal is a predetermined broadcast signal, the control unit 620 controls the display driving unit 630 to adjust the size of the image to a predetermined size and to display the image having the adjusted size in the predetermined position. That is, the display driving unit 630 activates only the predetermined region and inactivates the remaining region on the display unit 650. In this case, the size and the display position of the image may be set by default or may be set by the user through the user interface unit in the small-size display mode.

The activation/inactivation of the display region performed by the display driving unit 630 may be diversely performed in accordance with the type of the display unit 650 as illustrated in FIGS. 3 to 5.

On the other hand, an automatic adjustment of the size and the display position of the image in accordance with the type of the image signal may be selectively performed through the setting of a user mode. That is, the user may set an automatic image size changing menu through the user interface unit 610.

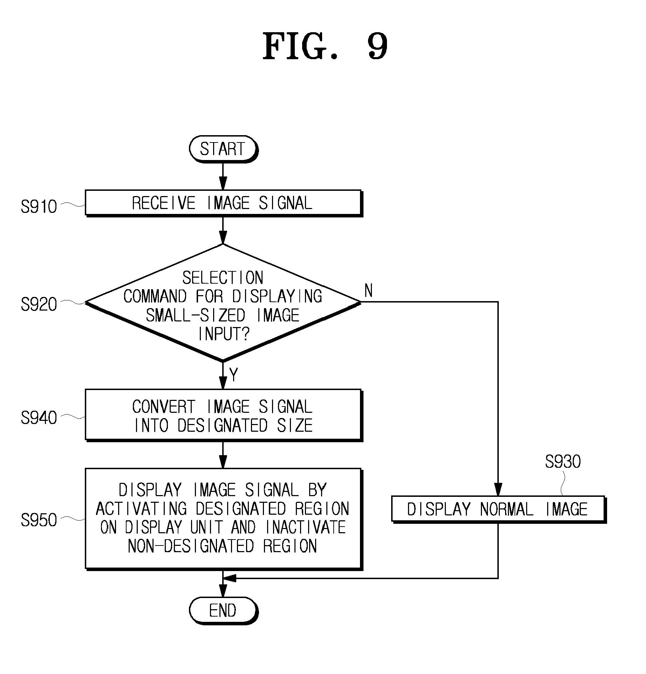

FIG. 9 is a flowchart illustrating a method of displaying an image according to an exemplary embodiment of the present invention.

Referring to FIG. 9, it is determined whether a selection command for displaying a small-sized image is input (S920) when the image is received (S910).

If the selection command is not input as a result of determination, a general image is displayed on the display screen (S930). That is, the image signal is displayed on the whole display screen.

By contrast, if the selection command is inputted as a result of determination, the image signal is converted into a predetermined size (S940).

Then, the region designated by the user is activated on the display unit, and the converted image signal is displayed. Meanwhile, the non-designated region is inactivated (S950). The inactivation is performed by intercepting the power supply to the non-designated region of the display unit or reducing the quantity of light through the reduction of the level of the power.

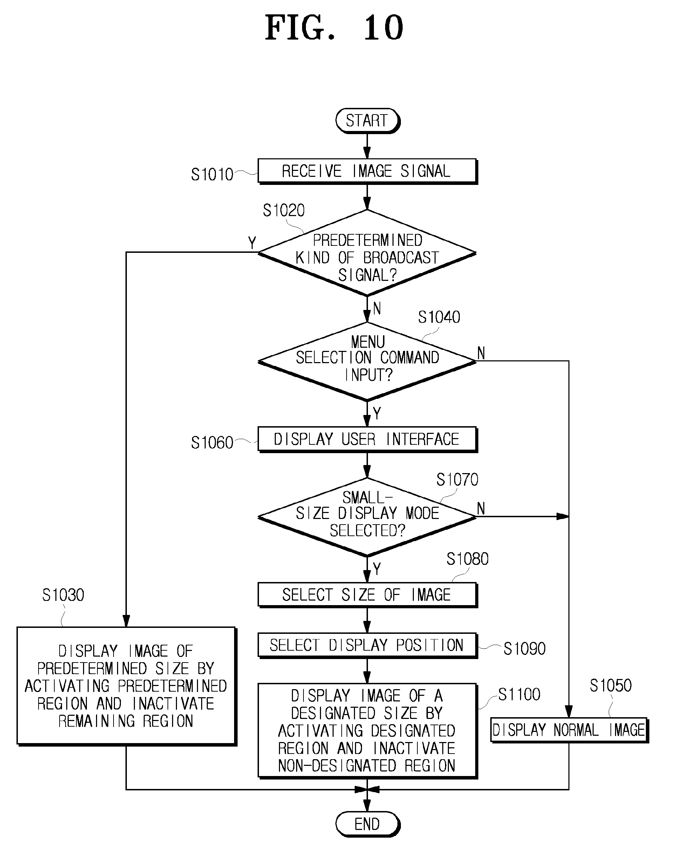

FIG. 10 is a flowchart illustrating a method of displaying an image according to another exemplary embodiment of the present invention.

Referring to FIG. 10, if the image signal is received (S1010), it is determined whether the received image signal corresponds to a predetermined kind of broadcast signal (S1020). If the received image signal corresponds to the predetermined broadcast signal as a result of determination, the predetermined region is activated, the image having the predetermined size is displayed, and the remaining region is inactivated (S1030).

By contrast, if the received image signal does not correspond to the predetermined broadcast signal as a result of determination, the received image signal is normally processed and displayed (S1050).

If a menu selection command is input (51040), the user interface is displayed (51060).

If a small-size display mode is not selected on the user interface (S1070), a normal image is displayed (S1050).

By contrast, if a user selects the small-size display mode on the user interface (S1070), the size and the display position of the image are selected (S1080 and S1090). In this case, the size and the display position of the image may be selected through a new user interface, or may be directly selected through a cursor 510 that is displayed on the display screen 500 as shown in FIG. 7. In addition, the size and the display position of the image set by default may be used, or the size and the display position of the image selected in the small-size display mode may be used as they are.

If the size and the display position of the image are selected, the designated region is activated to display the image having the designated size thereon, and the non-designated region is inactivated (S1100). This image display method may be performed in an LCD device or a PDP device. Since the activating/inactivating process in the respective devices has been described in detail with reference to FIGS. 3 to 5, the duplicate description thereof will be omitted.

As described above, according to the present invention, a user can select to reduce the size of an image being displayed and to display the small-sized image on a desired position of a display screen while viewing the image signal through an image display device. Accordingly, the power consumption is reduced and inconvenience which may be caused by illumination of the remaining region of the display unit is prevented. In addition, since the size of a designated kind of broadcast signal is automatically reduced and the small-sized image is displayed on the display screen, unnecessary power consumption can be reduced.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. An image display device comprising:
a display unit;
a display driving unit which controls an operation state of the display unit;
a user interface unit which receives an input of a user's selection command;
an image signal processing unit which receives an image signal and converts the received image signal into a designated size in accordance with the user's selection command; and
a control unit which controls the display driving unit to display the converted image signal by activating a designated region on the display unit in accordance with the user's selection command and inactivating a remaining region.

2. The image display device of claim 1, wherein the display unit comprises:
an LCD panel; and
a backlight unit, comprising a plurality of light-emitting elements, which provides light to the LCD panel;
wherein the display driving unit inactivates the remaining region by turning off light-emitting elements of the plurality of light-emitting elements, corresponding to the remaining region under a control of the control unit and turning on light-emitting elements of the plurality of light-emitting elements, corresponding to the designated region.

3. The image display device of claim 1, wherein the display unit comprises:
an LCD panel; and
a backlight unit, comprising a plurality of light-emitting elements, which provides light to the LCD panel;
wherein the display driving unit inactivates the remaining region to reduce a quantity of light of the remaining region by reducing an optical power, of light-emitting elements of the plurality of light-emitting elements, corresponding to the remaining region, to below a predetermined threshold value, under a control of the control unit.

4. The image display device of claim 1,
wherein the display unit comprises a Plasma Display Panel (PDP) including a plurality of PDP discharge cells; and
the display driving unit inactivates the remaining region by intercepting an address signal that is supplied to PDP discharge cells of the plurality of PD discharge cells, corresponding to the remaining region, under a control of the control unit.

5. The image display device of claim 1,
wherein the display unit comprises a Plasma Display Panel (PDP) including a plurality of PDP discharge cells; and
the display driving unit inactivates the remaining region to reduce the quantity of light of the remaining region by reducing a frequency of a sustain signal, being supplied to PDP discharge cells of the plurality of PDP discharge cells, corresponding to the remaining region, to below a predetermined threshold value, under a control of the control unit.

6. The image display device of claim 1, further comprising:
a determination unit which determines whether the image signal corresponds to a broadcast signal of a predetermined type;
wherein if the image signal corresponds to the broadcast signal of the predetermined type, the control unit controls the image signal processing unit to convert the image signal into a predetermined size, and controls the display driving unit to display the converted image signal by activating the designated region on the display unit and to inactivate the remaining region.

7. The image display device of claim 1,
wherein the user interface unit displays a first user interface for selecting a display mode; and
the control unit controls the display driving unit to activate the whole region of the display unit if a normal display mode is selected through the first user interface, and to activate the designated region if a small-size display mode is selected through the first user interface.

8. The image display device of claim 7,
wherein the user interface unit displays a second user interface for setting a display position and a size of the image signal if the small-size display mode is selected through the first user interface; and
the control unit controls the display driving unit to display the converted image signal in the display position and with the size set through the second user interface.

9. The image display device of claim 7,
wherein the user interface unit displays a cursor for setting a start point on a display screen if the small-size display mode is selected through the first user interface; and
if a confirmation command is input through the user interface unit in a state in which the cursor is positioned at designated coordinates, the control unit controls the image signal processing unit to convert the image signal into a size that corresponds to a tetragonal region taken from a point where the cursor is positioned to one corner of the display screen, and controls the display driving unit to display the converted image signal by activating the tetragonal region.

10. A method of displaying an image for an image display device having a display unit, comprising:
receiving an image signal;
determining whether a selection command to display a small-sized image is input;
if the selection command is input, converting the image signal into a designated size in accordance with the selection command; and
displaying the converted image signal by activating a designated region on the display unit and inactivating a remaining region in accordance with the selection command.

11. The method of claim 10,
wherein the display unit comprises an LCD panel and a backlight unit which provides light to the LCD panel by using a plurality of light-emitting elements; and
the displaying the converted image inactivates the remaining region by turning off light-emitting elements of the plurality of light-emitting elements, corresponding to the remaining region, and turns on light-emitting elements of the plurality of light-emitting elements, corresponding to the designated region.

12. The method of claim 10,
wherein the display unit comprises an LCD panel and a backlight unit which provides light to the LCD panel by using a plurality of light-emitting elements; and
the displaying the converted image inactivates the remaining region to reduce a quantity of light of the remaining region by reducing an optical power, of light-emitting elements of the plurality of light-emitting elements, corresponding to the remaining region, to below a predetermined threshold value.

13. The method of claim 10,
wherein the display unit comprises a Plasma Display Panel (PDP) including a plurality of PDP discharge cells; and
the displaying the converted image inactivates the remaining region by intercepting an address signal that is supplied to PDP discharge cells of the plurality of PDP discharge cells, corresponding to the remaining region.

14. The method of claim 10,
wherein the display unit comprises a Plasma Display Panel (PDP) including a plurality of PDP discharge cells; and
the displaying the converted image inactivates the remaining region to reduce a quantity of light of the remaining region by reducing a frequency of a sustain signal, being supplied to PDP discharge cells of the plurality of PDP discharge cells, corresponding to the remaining region, to below a predetermined threshold value.

15. The method of claim 10, further comprising:
determining whether the image signal corresponds to a broadcast signal of a predetermined type by confirming a type of the image signal;
if the image signal corresponds to the broadcast signal of the predetermined type, converting the image signal into a predetermined size; and
displaying the converted image signal by activating the designated region on the display unit, and inactivating the remaining region.

16. The method of claim 10, wherein the determining comprises:
if a menu selection command is input, displaying a first user interface which receives an input to select one of a normal display mode and a small-size display mode; and
if the small-size display mode is selected through the first user interface, determining that the selection command is input, and displaying a second user interface which selects a position and a size of the image.

17. The method of claim 10, wherein the determining comprises:
if a menu selection command is input, displaying a first user interface which receives an input to select one of a normal display mode and a small-size display mode; and
if the small-size display mode is selected through the first user interface, determining that the selection command is input, and displaying a cursor which sets a start point on the display unit.

18. The method of claim 17, wherein the converting the image signal converts the image signal into a size that corresponds to a tetragonal region taken from a point where the cursor is positioned to one corner of the display unit if a confirmation command is input in a state in which the cursor is positioned at designated coordinates; and
the displaying the converted image signal displays the converted image signal by activating the tetragonal region.
